# EUROPÄISCHE PATENTSCHRIFT

(11) **EP 2 815 682 B1**
(45) Veröffentlichungstag und Bekanntmachung des Hinweises auf die Patenterteilung: **10.05.2017**
(21) Anmeldenummer: 14171947.6
(22) Anmeldetag: 11.06.2014
(51) Int. Cl.: A47J 43/046, A47J 43/08

(54) **Küchenmaschine-Rührwerk-Abdichtung sowie Wellen-Abdichtung und Verfahren zur Herstellung einer Abdichtung einer Welle**
Kitchen appliance stirrer seal and shaft seal and method of manufacturing a seal of a shaft
Joint pour agitateur de machine de cuisine ainsi que joint d'arbre et procédé de fabrication d'un joint d'arbre

(30) Priorität: 19.06.2013 DE 102013106418
(43) Veröffentlichungstag der Anmeldung: 24.12.2014
(73) Patentinhaber: Vorwerk & Co. Interholding GmbH, 42275 Wuppertal (DE)
(72) Erfinder: Büttner, Oliver, 42283 Wuppertal (DE); Schiffer, Ernst-Uwe, 42111 Wuppertal (DE); Arnold, Hans-Peter, 58566 Kierspe (DE); Zachos, Alexandros, 45131 Essen (DE)
(74) Vertreter: Müller, Enno

(56) Entgegenhaltungen:
- EP-A2- 0 078 423

## Beschreibung

Die Erfindung betrifft zunächst eine Wellen-Abdichtung, insbesondere eine Wellen-Abdichtung an einer Rührwerk-Welle in einer Küchenmaschine, mit einer Welle und einem damit zusammenwirkenden Dichtteil.

Weiter betrifft die Erfindung ein Verfahren zur Herstellung einer Abdichtung einer Welle, insbesondere einer Abdichtung einer Rührwerk-Welle in einer Küchenmaschine, mit einer Welle und einem damit zusammenwirkenden Dichtteil.

Abdichtungen der in Rede stehenden Art sind bekannt. So werden diesbezüglich bevorzugt Radialwellendichtringe genutzt, so weiter insbesondere aus einem elastischen Material, wie weiter beispielsweise Gummi-Dichtringe.

Aus der EP 0 078 423 A2 ist eine Wellen-Lagerung bei einer Küchenmaschine bekannt, die in zwei gehäusefesten Lagern gelagert ist. Oberhalb eines dem Gehäuse zugeordneten obersten Lagers ist ein Sicherungsring aus Stahl angeordnet, der der axialen Sicherung der Antriebs-Welle gegenüber den sie aufnehmenden gerätefesten Lagern dient.

Im Hinblick auf den bekannten Stand der Technik stellt sich der Erfindung die Aufgabe, eine Wellen-Abdichtung bzw. ein Verfahren zur Abdichtung einer Welle anzugeben, die vorteilhaft ist bzw. eine vorteilhafte Durchführung erlaubt.

Diese Aufgabe ist zunächst beim Gegenstand des Anspruches 1 gelöst, wobei darauf abgestellt ist, dass das Dichtteil ein Lochscheibenteil ist, das mit einem Lochrand unmittelbar an der Welle anliegt und jedenfalls in diesem Bereich plastisch verformt ist.

Bevorzugt ist hierbei das Lochscheibenteil als PTFE-Teil (Polytetrafluorethylen) hergestellt, alternativ aus einem Metall wie bspw. Stahl. Im Grundriss weist das Lochscheibenteil bevorzugt eine kreisrunde Ausgestaltung auf, weiter bevorzugt mit einem kreisscheibenförmigen, mittigen Durchbruch, welcher von einem Lochrand begrenzt ist. Mit diesem Lochrand liegt das Lochscheibenteil bevorzugt axial dichtend an der Welle an, dies insbesondere zufolge einer zumindest in diesem unmittelbaren Anlagebereich vorgesehene plastische Verformung des Lochscheibenmaterials. Hierdurch ist eine herstellungsgünstige und darüber hinaus lebensmittelkontaktgeeignete Abdichtung erreicht. Ein Toleranzausgleich ist durch radiales Ausrichten des Lochscheibenteils im Bereich des Lochrandes an der Welle bevorzugt bereits im Zuge der Montage gegeben. Auch ist hierdurch eine einfache, bauteiltoleranz-unabhängige Montage erreichbar. Durch die plastische Verformung insbesondere im Bereich des Lochrandes ist eine im Querschnitt lippenförmige Dichtanlage des den Lochrand umgebenden Lochscheibenteil-Bereiches an dem Wellenmantel erreicht.

Verfahrensmäßig ist die Aufgabe beim Gegenstand des Anspruches 11 gelöst, wobei darauf abgestellt ist, dass ein Lochscheibenteil mit einem Lochdurchmesser, der geringer ist als der Wellendurchmesser in dem abzudichtenden Bereich, mit Kraft über die Welle geschoben wird, wobei die Welle zumindest einführseitig einen gegenüber dem abzudichtenden Bereich geringeren Durchmesser aufweist, unter plastischer Verformung und Aufweitung des Lochbereiches des Dichtteiles.

Zufolge des vorgeschlagenen Verfahrens ist eine herstellungsgünstige, einfache Abdichtung einer Welle erreichbar. Die Montage ist vereinfacht und bauteiltoleranz-unabhängig. Das Lochscheibenteil ist hierbei bevorzugt aus einem rostfreien Stahl hergestellt, bevorzugt mit einer in Achserstreckung der Welle betrachteten Dicke, die eine plastische Verformung und Aufweitung insbesondere des Lochbereiches zulässt. Durch die Verformung und Aufweitung ist eine Anpassung des Lochbereiches, insbesondere des hiernach sich einstellenden inneren Durchmessers des Dichtteiles an dem Außendurchmesser der abzudichtenden Welle erreicht. Das Lochscheibenteil wird hierzu mit Kraft über die Welle in Wellenerstreckungsrichtung geschoben. Der Lochrandbereich des Lochscheibenteiles stülpt sich hierbei entgegen der Verschieberichtung aus. Es ergibt sich hiernach bevorzugt eine linienartige Anlage des Lochrandbereiches an dem Wellenmantel. Der den Lochrand umgebende Bereich des Lochscheibenteiles stülpt sich mit Bezug auf einen Querschnitt durch das Lochscheibenteil dichtlippenartig aus. Zufolge des vorgeschlagenen Verfahrens ist eine günstige Montage und zugleich Anpassung des Dichtsitzes an dem Wellenmantel erreicht.

So ist in einer bevorzugten Ausgestaltung vorgesehen, dass das Lochscheibenteil im Querschnitt einen trichterförmigen Bereich aufweist mit einem durch den Lochrand gegebenen, geringsten Durchmesser. Dieser trichterförmige Bereich legt sich bevorzugt lippenartig, wenngleich weiter bevorzugt sich nicht zum Lochrand hin ausspitzend an den Wellenmantel an. Es ergibt sich hierdurch weiter bevorzugt ausgehend von dem plastisch verformten, den Lochrand umgebenden Bereich eine Erstreckung des Lochscheibenmaterials - im Querschnitt betrachtet - unter Einbeziehung eines kurvenabschnittförmigen Bereiches von radial innen nach radial außen. Weiter bevorzugt liegt das Dichtteil im Bereich des Lochrandes linienartig an dem Mantel der Welle an.

Auch ist bevorzugt, dass das Dichtteil mit seinem Lochrand unter elastischer Vorspannung an der Welle anliegt. So ist insbesondere der insgesamt plastisch verformte Bereich weiter bevorzugt zumindest teilweise elastisch eingestellt, weiter bevorzugt mit einer entgegen der plastischen Verformungsrichtung elastisch wirkenden Komponente in Richtung der Welle. Hierdurch ist eine wirksame und günstige axiale Abdichtung an dem Wellenmantel erreicht.

Die Abdichtung dichtet bevorzugt ein Wälzlager einer Welle ab. Derartige Wälzlager sollen zufolge Anordnung einer solchen Abdichtung insbesondere gegen Flüssigkeiten, bei Einsatz in einer Küchenmaschine zudem auch gegen Lebensmittel abgedichtet werden. Hierzu bietet sich, insbesondere hinsichtlich der axialen Abdichtung der Welle, eine Abdichtung in Form eines vorbeschriebenen Lochscheibenteiles an.

Die trichterförmige Verjüngung ist hierbei weiter bevorzugt von dem Wälzlager weg gerichtet angeordnet. Entsprechend werden etwaig an dem Wellenmantel ablaufende Flüssigkeiten, auf den Bereich des Scheiben-Lochrandes auftreffend gezielt nach radial außen abgeleitet, dies zufolge des sich an den Lochrand anschließenden trichterförmigen Bereiches.

Auch ist bevorzugt, dass beidseitig des Wälzlagers eine Abdichtung ausgebildet ist, so dass entsprechend das Wälzlager mit Bezug auf die Wellenlängserstreckung zwischen zwei Lochscheibenteilen zur Ausbildung der axialen Abdichtung eingefasst ist.

Das Lochscheibenteil ist in einer bevorzugten Ausgestaltung auf der dem Widerlager abgewandten Seite, d. h. weiter bevorzugt auf der lochrandseitig ausgestülpten Seite, von einer Überfangkappe abgedeckt. Die Abdeckung ist weiter bevorzugt insbesondere in dem radial außerhalb des unmittelbaren Abdichtungsbereiches zwischen Lochscheibenteil und Welle gegebenen Bereichs ausgebildet. Die Überfangkappe ist weiter bevorzugt mit dem Wälzlagerträger oder dergleichen befestigt, beispielsweise mit diesem verklebt, wobei weiter bevorzugt die Überfangkappe aus einem Kunststoffmaterial, alternativ aus einem metallischen Werkstoff gefertigt ist.

Die Überfangkappe ist in einer bevorzugten Ausgestaltung zugleich auch zur mittelbaren oder unmittelbaren axialen Sicherung der Positionierung des Lochscheibenteiles ausgebildet.

Zwischen der Überfangkappe und dem Lochscheibenteil (bevorzugt in Axialausrichtung betrachtet) ist in weiter bevorzugter Ausgestaltung eine Elastomerdichtung angeordnet. Diese Elastomerdichtung ist bevorzugt eine Ringdichtung, welche im Wesentlichen koaxial zur Wellenachse ausgerichtet ist, und dient zur radialen Abdichtung, wirkt entsprechend zusammen mit dem Lochscheibenteil zur Abdichtung in axialer und radialer Richtung.

Hierbei ist die Elastomerdichtung bevorzugt ohne Kontakt zur Welle angeordnet, weist entsprechend bevorzugt einen freien Innendurchmesser auf, der größer gewählt ist als der in diesem umfassten Bereich gegebene Wellenaußendurchmesser. So ist weiter bevorzugt ein Innendurchmesser der Elastomerdichtung gegeben, die dem 1,1- bis 1,5-Fachen des in dieser Ebene betrachteten Wellen-Außendurchmessers entspricht.

In Radialrichtung betrachtet ist bevorzugt zwischen der Elastomerdichtung und der Welle das gegebenenfalls plastisch verformte Lochscheibenteil umlaufend verlaufend angeordnet. Bevorzugt ist in diesem Bereich allein der plastisch verformte Bereich des Lochscheibenteiles vorgesehen, während der nicht verformte Lochscheibenteil-Bereich, der sich bevorzugt in einer Querebene zur Wellenachse erstreckt, in zumindest teilweiser Überdeckung zu dem Elastomerteil vorgesehen ist.

Das Lochscheibenteil ist in bevorzugter Ausgestaltung, mit Ausnahme des plastisch verformten, lochrandseitigen Bereiches, plattenförmig gestaltet, so dass sich entsprechend ein umlaufender, plattenförmiger Ringbereich des Lochscheibenteiles einstellt. Auf eine Flachseite dieses Ringbereiches ist in bevorzugter Ausgestaltung die Elastomerdichtung einwirkend angeordnet.

Bevorzugt ist weiter, dass das Lochscheibenteil in unverformtem Zustand plattenförmig mit zwei parallel verlaufenden Flachseiten-Oberflächen gebildet ist. Die Flachseiten-Oberflächen erstrecken sich bevorzugt über die gesamte Fläche des Lochscheibenteiles, weiter bevorzugt zumindest über den plastisch verformbaren Bereich rund um den Lochrand. Weiter bevorzugt handelt es sich hierbei um ein Stanzteil. Der Innendurchmesser des Lochscheibenteiles entspricht bevorzugt dem 0,7- bis 0,98-Fachen des Wellenaußendurchmessers im abzudichtenden Bereich. Weiter weist das Lochscheibenteil insbesondere im plastisch verformbaren Bereich eine Dicke von 0,3 bis 1 mm, weiter bevorzugt etwa 0,5 mm auf.

Weiter auf Seite 7, oben, der ursprünglich eingereichten Unterlagen.

Die Welle weist zur Montage der Dichtung, insbesondere zur plastischen Verformung und Aufweitung des Lochbereiches des Dichtteiles ein dornförmiges Ende auf, welches sich entsprechend ausgehend von dem Wellendurchmesser im abzudichtenden Bereich hin zum freien Ende der Welle dornartig verjüngt. Über diesen Dorn wird das Lochscheibenteil mit Kraft auf die Welle verschoben, unter plastischer Verformung und Aufweitung des Lochbereiches unter entsprechender Anpassung an den Wellenaußendurchmesser. Alternativ wird die Welle zur Montage der Dichtung mit einem abnehmbaren Dornfortsatz versehen. Dieser dient einzig der Montage des Lochscheibenteiles an der Welle; wird hiernach bevorzugt von der Welle entfernt.

Die vor- und nachstehend angegebenen Bereich bzw. Wertebereiche oder Mehrfachbereiche schließen hinsichtlich der Offenbarung auch sämtliche Zwischenwerte ein, insbesondere in ¹/₁₀-Schritten der jeweiligen Dimension, gegebenenfalls also auch dimensionslos, insbesondere 1,01-fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: in einer Axialschnittdarstellung ein Wälzlager für eine Welle, mit Axial- und Radialabdichtungen;

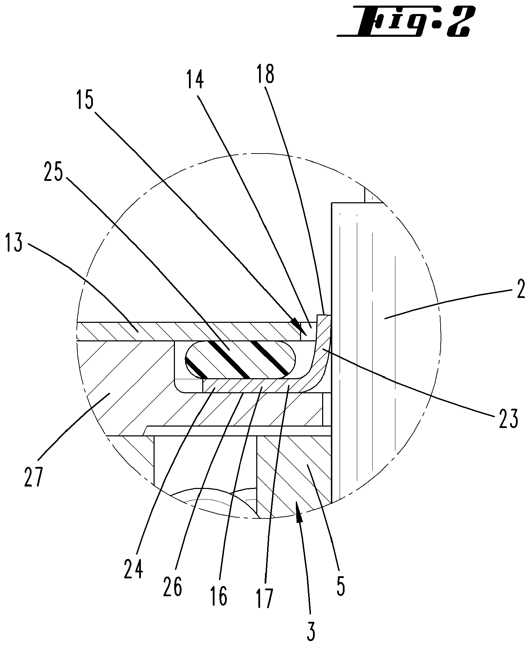

- Fig. 2: die Herausvergrößerung des Bereiches II in Figur 1;
- Fig. 3: in Axialschnittdarstellung ein auf die Welle aufgesetzter, abnehmbarer Dornfortsatz als Hilfsmittel zur Montage einer Abdichtung auf der Welle;
- Fig. 4: eine Axialabdichtung in Draufsicht.

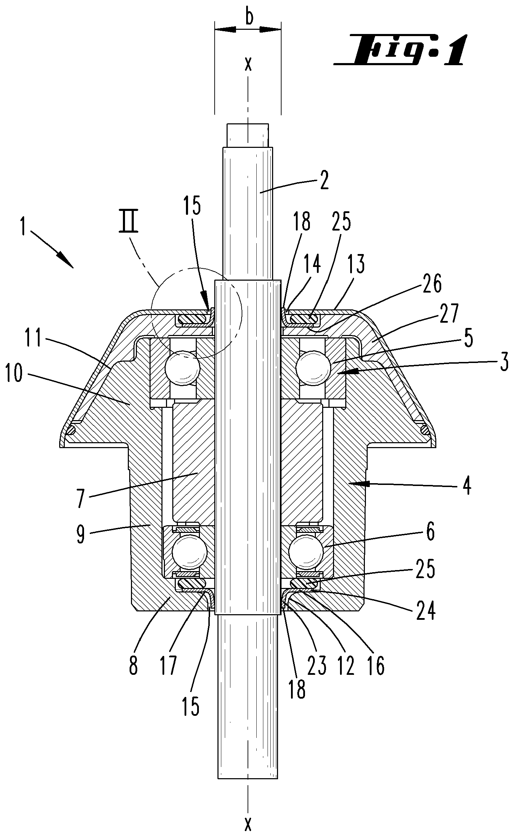

Dargestellt und beschrieben ist zunächst mit Bezug zu Figur 1 ein Rührwerklager 1 für eine Küchenmaschine.

Das Rührwerklager 1 weist zunächst eine Welle 2 auf, über welche im Betriebszustand ein nicht dargestelltes Rührwerk in einem Rührgefäß der Küchenmaschine antreibbar ist.

Die Welle 2 ist über ein Wälzlager 3 in einem Aufnahmeteil 4 des Rührwerklagers 1 gelagert. In dem Ausführungsbeispiel, wie weiter auch bevorzugt, besteht das Wälzlager 3 aus zwei in Erstreckungsrichtung der Welle 2 zueinander beabstandeten Lagern 5 und 6. Zur axialen Distanzierung der Lager 5 und 6 ist ein, die Welle 2 bevorzugt frei umfassendes Distanzteil 7 vorgesehen. Es handelt sich hierbei bevorzugt um ein hülsenartiges Bauteil, welches sich jeweils endseitig auf dem jeweiligen Innenring des Lagers 5 bzw. 6 abstützt.

Das Aufnahmeteil 4 ist insgesamt im Wesentlichen topfförmig gestaltet, mit einem Topfboden 8 und einer, bei rotationssymmetrischer Ausgestaltung des Aufnahmeteiles 4, umlaufenden Topfwandung 9. Letztere geht abgewandt der Topfwandung 9 bevorzugt über in einen Konusabschnitt 10, welcher wandungs-außenseitig eine im Axialquerschnitt gemäß der Figur 1 mit zunehmender Beabstandung zum Topfboden 8 in Richtung auf eine Wellenachse x geneigte Konusfläche 11 bildet.

Die Welle 2 durchsetzt den Topfboden 8 im Bereich eines Durchlasses 12, hierbei weiter das Topfinnere des Aufnahmeteils 4 durchsetzend, wobei die Wellenachse x in der Montagesituation gemäß Figur 1 bevorzugt zugleich auch die Mittelachse des Rührwerklagers 1 darstellt.

Die von dem Konusabschnitt 10 umfasste Topföffnung und hierbei entsprechend auch insbesondere das obere Lager 5 sind überdeckt von einer Überfangkappe 13. Diese Überfangkappe 13 ist hierbei angepasst an die konische Außengestaltung des Aufnahmeteils 4. Die der Konusfläche 11 des Aufnahmeteils 4 zugewandte Fläche der Überfangkappe 13 ist gleichfalls angepasst konisch ausgebildet.

Die Welle 2 durchsetzt die Überfangkappe 13 im Bereich einer Durchtrittsöffnung 14.

Die Überfangkappe 13 ist mit dem Aufnahmeteil 4 befestigt, beispielsweise verklebt.

Zum Schutz des Aufnahmeteil-Inneren, insbesondere zum Schutz der Wälzlager 3 vor eindringender Feuchtigkeit, ist beidseitig des Wälzlagers 3 jeweils eine Abdichtung 15 vorgesehen. Die Abdichtung 15 ist jeweils in dem Bereich des Rührwerklagers 1 vorgesehen, an welchem die Welle 2 aus diesem heraustritt, entsprechend weiter bevorzugt jeweils auch zugeordnet der Seite eines jeden Lagers 5, 6, welches dem anderen Lager abgewandt ist.

Die beiden Abdichtungen 15 sind bevorzugt jeweils zweiteilig ausgebildet, jeweils bevorzugt aufweisend eine Axialdichtung und eine Radialdichtung.

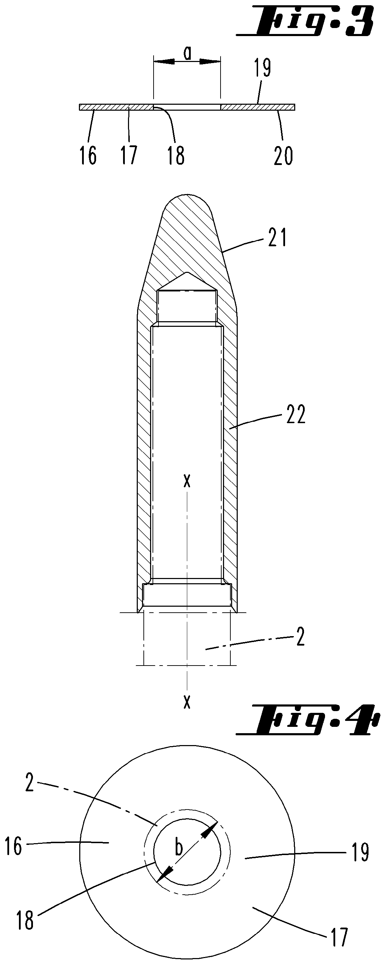

Die Axialdichtung ist jeweils gebildet durch ein Dichtteil 16, welches bevorzugt als Lochscheibenteil 17 ausgebildet ist. Hierbei handelt es sich weiter bevorzugt um ein PTFE-Teil mit einem kreisrunden Grundriss (vgl. Figur 4).

Mit Bezug auf den Grundriss weist das Dichtteil 16 mittig ein kreisrundes Loch mit einem umlaufenden Lochrand 18 auf. Der Durchmesser a im Bereich des Lochrandes 18 entspricht bevorzugt dem 0,7- bis 0,98-Fachen des Durchmessers b der Welle 2 im durch das Dichtteil 16 abzudichtenden Bereich.

In den Figuren 3 und 4 ist das Lochscheibenteil 17 als plattenförmiges Bauteil mit zwei parallel zueinander verlaufenden Flachseiten-Oberflächen 19, 20 dargestellt. Entsprechend erstreckt sich auch der Lochrand 18 innerhalb der durch die Oberflächen 19 und 20 begrenzten Ebenenschar.

Die Ausbildung des Lochscheibenteiles 17 zur Formung eines Dichtteiles 16 erfolgt bevorzugt im Zuge einer Montage, gegebenenfalls aber auch in einem vorausgegangenen, gesonderten Umformungsschritt.

Zufolge des gegenüber dem Wellendurchmesser b verringerten freien Durchmessers a im Bereich des Lochrandes 18 ergibt sich im Zuge des Aufschiebens des Lochscheibenteils 17 auf die Welle 2 eine plastische Verformung und Aufweitung des den Lochrand 18 umgebenden Bereiches des Lochscheibenteiles 17.

Entsprechend wird der Lochrandbereich entgegen der Aufschieberichtung des Lochscheibenteiles 17 auf die Welle 2 ausgestülpt, womit sich mit Bezug auf einen Querschnitt gemäß Figur 1 eine trichterförmige Verjüngung von dem jeweils zugewandten Lager weg gerichtet ausbildet.

Zur Montage des Lochscheibenteiles 17 wird in dem dargestellten Ausführungsbeispiel das freie Ende der Welle 2 mit einem abnehmbaren Dornfortsatz 21 versehen. Dieser dient bevorzugt allein als Hilfsmittel zur Montage des Lochscheibenteiles 17. Alternativ ist das freie Ende der Welle 2 entsprechend dornartig ausgebildet.

Das in Zuordnungsstellung freie Ende des Dornfortsatzes 21 ist konisch verjüngt, wobei sich an diesem Konus ein zylindrisch geformter Abschnitt 22 anschließt, dessen Außendurchmesser bevorzugt dem Durchmesser der Welle 2 im abzudichtenden Bereich entspricht, weiter bevorzugt etwa dem 1,05- bis 1,2-Fachen des Wellendurchmessers im Abdichtbereich.

Zufolge Aufschieben des Lochscheibenteiles 17 über den Dornfortsatz 21 wird der Bereich des Lochrandes 18 insbesondere beim Überschieben über den Dornfortsatz 21 plastisch verformt und aufgeweitet, so dass sich ein entgegen der Aufschieberichtung sich aufstellender, umlaufender Dichtkragen 23 ergibt.

Unter weiterem Aufschieben über den Abschnitt 22 wird das partiell verformte Lochscheibenteil 17 auf die Welle 2 geschoben, wonach das Dichtteil 16 mit dem Lochrand 18 bevorzugt unter elastischer Vorspannung nach radial innen in Richtung auf die Wellenachse x an der Welle 2 anliegt.

Nach Aufschieben des Dichtteiles 16 auf die Welle 2 wird bevorzugt der Dornfortsatz 21 wieder entfernt.

Das Dichtteil 16 liegt hiernach weiter bevorzugt mit einem verformungsmäßig unbeeinflussten, weiterhin plattenförmigen Ringabschnitt 24 auf einem ebenflächigen Widerlager bevorzugt im Bereich des Aufnahmeteiles 4 auf.

Weiter bevorzugt sind beide Dichtteile 16 gleich gestaltet, jeweils mit einem trichterförmigen Bereich bzw. Dichtkragen 23, der von dem zugeordneten Lager 5 bzw. 6 weg gerichtet ist. Entsprechend weisen die Dichtkragen 23 beider Dichtteile 16 in entgegengesetzte Richtungen, jeweils nach axial außen.

Das dem Lager 6 zugeordnete Dichtteil 16 sitzt hierbei mit dessen Ringabschnitt 24 auf dem Topfboden 8 auf, wobei der Dichtkragen 23 in den Durchlass 12 einragt und dort im Bereich des Lochrandes 18 dichtend auf den Wellenmantel einwirkt.

Zwischen diesem Ringabschnitt 24 und dem zugeordneten Lager 6 ist weiter bevorzugt eine Elastomerdichtung 25 positioniert. Hierbei handelt es sich bevorzugt um eine Ringdichtung, weiter bevorzugt in Form einer Gummi-Ringdichtung, mit einem freien Innendurchmesser, der größer gewählt ist als der Außendurchmesser der Welle 2 in diesem Bereich. Die Elastomerdichtung 25 bildet die Radialdichtung.

Das dem Lager 5 zugeordnete Dichtteil 16 sitzt mit dessen Ringabschnitt 24 auf einem Boden 26 einer Einsenkung eines, die Öffnung des Aufnahmeteiles 4 überdeckenden Deckelteiles 27 ein. Der Dichtkragen 23 greift frei durch die Durchtrittsöffnung 14 der das Deckelteil 27 überfangenden Überfangkappe 13, zur dichtenden Wirkung des Lochrandes 18 an dem Wellenmantel.

Zwischen dem Ringabschnitt 24 und der Überfangkappe 13 ist auch hier eine Elastomerdichtung 25 geschaltet. Über diese und die bevorzugt mit dem Deckelteil 27 und hierüber mit dem Aufnahmeteil 4 verbundene Überfangkappe 13 ist das Dichtteil 16 axial gesichert.

Zufolge der vorgeschlagenen Ausgestaltung und Ausbildung des Dichtteiles 16 richtet sich dieses bezüglich des Dichtkragens 23 frei an der Welle 2 aus. Es ist somit eine herstellungsgünstige und darüber hinaus lebensmittelkontaktgeeignete Abdichtung erzielt. Darüber hinaus ist eine Funktionsaufteilung von axialem und radialem Dichten erreicht. Der Toleranzausgleich ist durch radiales Ausrichten des Dichtteiles 16 an der Welle 2 bei der Montage erreicht, wobei weiter diese Montage sich als einfach und bauteiltoleranz-unabhängig erweist.

**Bezugszeichenliste**

| | | | |
|---|---|---|---|
| 1 | Rührwerklager | 26 | Boden |
| 2 | Welle | 27 | Deckelteil |
| 3 | Wälzlager | | |
| 4 | Aufnahmeteil | a | Durchmesser |
| 5 | Lager | b | Durchmesser |
| 6 | Lager | x | Wellenachse |
| 7 | Distanzteil | | |
| 8 | Topfboden | | |
| 9 | Topfwandung | | |
| 10 | Konusabschnitt | | |
| 11 | Konusfläche | | |
| 12 | Durchlass | | |
| 13 | Überfangkappe | | |
| 14 | Durchtrittsöffnung | | |
| 15 | Abdichtung | | |
| 16 | Dichtteil | | |
| 17 | Lochscheibenteil | | |
| 18 | Lochrand | | |
| 19 | Oberfläche | | |
| 20 | Oberfläche | | |
| 21 | Dornfortsatz | | |
| 22 | Abschnitt | | |
| 23 | Dichtkragen | | |
| 24 | Ringabschnitt | | |
| 25 | Elastomerdichtung | | |

## Patentansprüche

1. Wellen-Abdichtung (15), insbesondere Wellen-Abdichtung (15) einer Rührwerkwelle (2) in einer Küchenmaschine, mit einer Welle (2) und einem damit zusammenwirkenden Dichtteil (16), **dadurch gekennzeichnet, dass** das Dichtteil (16) ein Lochscheibenteil (17) ist, das mit einem Lochrand (18) unmittelbar an der Welle (2) anliegt und jedenfalls in diesem Bereich plastisch verformt ist.

2. Wellen-Abdichtung nach Anspruch 1, **dadurch gekennzeichnet, dass** das Lochscheibenteil (17) im Querschnitt einen trichterförmigen Bereich aufweist mit einem durch den Lochrand (18) gegebenen, geringsten Durchmesser.

3. Wellen-Abdichtung nach Anspruch 1 oder 2, **dadurch gekennzeichnet, dass** das Dichtteil (16) mit seinem Lochrand (18) unter elastischer Vorspannung an der Welle (2) anliegt.

4. Wellen-Abdichtung nach einem der Ansprüche 1 bis 3, **dadurch gekennzeichnet, dass** die Abdichtung (15) ein Wälzlager (3) der Welle (2) abdichtet.

5. Wellen-Abdichtung nach einem der Ansprüche 2 bis 4, **dadurch gekennzeichnet, dass** die trichterförmige Verjüngung von dem Wälzlager (3) weggerichtet angeordnet ist.

6. Wellen-Abdichtung nach einem der Ansprüche 1 bis 5, **dadurch gekennzeichnet, dass** beidseitig des Wälzlagers (3) eine Abdichtung (15) ausgebildet ist.

7. Wellen-Abdichtung nach einem der Ansprüche 1 bis 6, **dadurch gekennzeichnet, dass** das Lochscheibenteil (17) auf der dem Wälzlager (3) abgewandten Seite von einer Überfangkappe (13) abgedeckt ist.

8. Wellen-Abdichtung nach Anspruch 7, **dadurch gekennzeichnet, dass** zwischen der Überfangkappe (13) und dem Lochscheibenteil (17) eine Elastomerdichtung (25) angeordnet ist.

9. Wellen-Abdichtung nach Anspruch 8, **dadurch gekennzeichnet, dass** die Elastomerdichtung (25) ohne Kontakt zu der Welle (2) angeordnet ist.

10. Wellen-Abdichtung nach einem der Ansprüche 8 oder 9, **dadurch gekennzeichnet, dass** zwischen der Elastomerdichtung (25) und der Welle (2) das gegebenenfalls plastisch verformte Lochscheibenteil (17) verläuft.

11. Verfahren zur Herstellung einer Abdichtung (15) einer Welle (2), insbesondere Abdichtung (15) einer Rührwerkwelle (2) in einer Küchenmaschine, mit einer Welle (2) und einem damit zusammenwirkenden Dichtteil (16), **dadurch gekennzeichnet, dass** ein Lochscheibenteil (17) mit einem Lochdurchmesser (a), der geringer ist als der Wellendurchmesser (b) in dem abzudichtenden Bereich, mit Kraft über die Welle (2) geschoben wird, wobei die Welle (2) zumindest einführseitig einen gegenüber dem abzudichtenden Bereich geringeren Durchmesser aufweist, unter plastischer Verformung und Aufweitung des Lochbereiches des Dichtteiles (16).

12. Verfahren nach Anspruch 11, **dadurch gekennzeichnet, dass** das Lochscheibenteil (17) im unverformten Zustand plattenförmig mit zwei parallel verlaufenden Flachseiten-Oberflächen (19, 20) gebildet ist und/ oder bevorzugt, dass die Welle (2) zur Montage der Dichtung mit einem abnehmbaren Dornfortsatz (21) versehen wird.

## Claims

1. Shaft seal (15), in particular a shaft seal (15) for a mixer shaft (2) of a food processor, comprising a shaft (2) and a sealing part (16) that interacts therewith, **characterised in that** the sealing part (16) is a perforated disc part (17), a hole rim (18) of which rests directly against the shaft (2) and which disc part is plastically deformed in any case in this region.

2. Shaft seal according to claim 1, **characterised in that**, in cross section, the perforated disc part (17) comprises a funnel-shaped region, the smallest diameter of which is formed by the hole rim (18).

3. Shaft seal according to either claim 1 or claim 2, **characterised in that** the hole rim (18) of the sealing part (16) rests against the shaft (2) in a resiliently pretensioned manner.

4. Shaft seal according to any of claims 1 to 3, **characterised in that** the seal (15) seals a rolling bearing (3) of the shaft (2).

5. Shaft seal according to any of claims 2 to 4, **characterised in that** the funnel-shaped tapered portion points away from the rolling bearing (3).

6. Shaft seal according to any of claims 1 to 5, **characterised in that** a seal (15) is formed on either side of the rolling bearing (3).

7. Shaft seal according to any of claims 1 to 6, **characterised in that** the perforated disc part (17) is covered by a cover cap (13) on the side facing away from the rolling bearing (3).

8. Shaft seal according to claim 7, **characterised in that** an elastomer seal (25) is arranged between the cover cap (13) and the perforated disc part (17).

9. Shaft seal according to claim 8, **characterised in that** the elastomer seal (25) is arranged so as not to be in contact with the shaft (2).

10. Shaft seal according to either claim 8 or claim 9, **characterised in that** the perforated disc part (17) that is optionally plastically deformed extends between the elastomer seal (25) and the shaft (2).

11. Method for producing a seal (15) for a shaft (2), in particular a seal (15) for a mixer shaft (2) in a food processor, comprising a shaft (2) and a sealing part (16) that interacts therewith, **characterised in that** a perforated disc part (17) having a hole diameter (a) that is smaller than the diameter (b) of the shaft in the region to be sealed is pushed over the shaft (2) with force, the diameter at least of the insertion end of the shaft (2) being smaller than that of the region to be sealed, thus plastically deforming and expanding the perforated region of the sealing part (16).

12. Method according to claim 11, **characterised in that**, when not deformed, the perforated disc part (17) is plate-shaped and has two flat side surfaces (19, 20) which extend in parallel, and/or preferably **characterised in that** the shaft (2) is provided with a removable spiked extension (21) for mounting the seal.

## Revendications

1. Joint d'arbre (15), en particulier joint d'arbre (15) d'un arbre d'agitateur (2) dans un robot de cuisine, avec un arbre (2) et un élément d'étanchéité (16) coopérant avec celui-ci, **caractérisé en ce que** l'élément d'étanchéité (16) est un élément formant disque perforé (17) lequel est directement appliqué avec un bord du trou (18) contre l'arbre (2) et est déformé de manière plastique au moins dans cette zone.

2. Joint d'arbre selon la revendication 1, **caractérisé en ce que** l'élément formant disque perforé (17) présente en section transversale une région en forme d'entonnoir avec un diamètre minimal défini par le bord du trou (18).

3. Joint d'arbre selon la revendication 1 ou 2, **caractérisé en ce que** l'élément d'étanchéité (16) avec son bord de trou (18) est appliqué contre l'arbre (2) sous précontrainte élastique.

4. Joint d'arbre selon l'une des revendications 1 à 3, **caractérisé en ce que** le joint (15) assure l'étanchéité d'un palier à roulement (3) de l'arbre (2).

5. Joint d'arbre selon l'une des revendications 2 à 4, **caractérisé en ce que** le rétrécissement en forme d'entonnoir est agencé en étant orienté en s'éloignant du palier de roulement (3).

6. Joint d'arbre selon l'une des revendications 1 à 5, **caractérisé en ce qu'**un joint (15) est formé des deux côtés du palier à roulement (3).

7. Joint d'arbre selon l'une des revendications 1 à 6, **caractérisé en ce que** l'élément formant disque perforé (17) est couvert par un capuchon de couverture (13) du côté opposé au palier à roulement (3).

8. Joint d'arbre selon la revendication 7, **caractérisé en ce qu'**un joint en élastomère (25) est agencé entre le capuchon de couverture (13) et l'élément formant disque perforé (17).

9. Joint d'arbre selon la revendication 8, **caractérisé en ce que** le joint en élastomère (25) est disposé sans contact avec l'arbre (2).

10. Joint d'arbre selon l'une des revendications 8 ou 9, **caractérisé en ce que** l'élément formant disque perforé (17), le cas échéant déformé de manière plastique, s'étend entre le joint en élastomère (25) et l'arbre (2).

11. Procédé pour fabriquer un joint (15) d'un arbre (2), en particulier joint (15) d'un arbre d'agitateur (2) dans un robot de cuisine, avec un arbre (2) et un élément d'étanchéité (16) coopérant avec celui-ci, **caractérisé en ce qu'**un élément formant disque perforé (17) avec un diamètre de trou (a) inférieur au diamètre de l'arbre (b) dans la région à étanchéifier, est glissé à force sur l'arbre (2) sous déformation plastique et élargissement de la région du trou de l'élément d'étanchéité (16), dans lequel l'arbre (2) présente au moins du côté d'insertion un diamètre inférieur par rapport à la région à étanchéifier.

12. Procédé selon la revendication 11, **caractérisé en ce que** l'élément formant disque perforé (17) est réalisé à l'état non déformé sous forme de plaque avec deux surfaces extérieures planes s'étendant parallèlement et/ou **en ce que**, de préférence, l'arbre (2) est pourvu d'un prolongement formant mandrin amovible pour le montage du joint.
